# EUROPEAN PATENT SPECIFICATION

(11) **EP 1 635 048 B1**
(45) Date of publication and mention of the grant of the patent: **15.08.2007**
(21) Application number: 05017875.5
(22) Date of filing: 17.05.2002
(51) Int. Cl.: F01N 3/28

(54) **Method and apparatus for manufacturing a catalytic converter**
Verfahren und Vorrichtung zur Herstellung eines Katalysators
Procédé et dispositif de fabrication d'un pot catalytique

(30) Priority: 18.05.2001 US 291894 P
(43) Date of publication of application: 15.03.2006
(62) Divisional of application: 02731875.7
(73) Proprietor: Hess Engineering, Inc., Niles, MI 49120 (US)
(72) Inventor: Mayfield, David, Niles MI 49120 (US)
(74) Representative: Klunker . Schmitt-Nilson . Hirsch

(56) References cited:
- EP-A- 0 982 480
- EP-A- 1 074 704
- WO-A-99/32215
- US-A- 5 273 724
- US-A- 5 829 132

## Description

This application claims the benefit of United States Provisional Patent Application Serial Number 60/291,894 filed May 18, 2001.

### BACKGROUND OF THE INVENTION

The invention generally relates to the manufacturing of catalytic converters for automotive use.

It is common in automotive applications to require a catalytic converter in the exhaust system of automobiles, typically placed between the engine exhaust manifold and the muffler system of the automobile. As disclosed in U.S. Patent 5,482,686, the catalytic converter normally includes a monolith substrate, a mat material surrounding the monolith substrate, the monolith and mat material then being encapsulated in a metal enclosure which can be a cylindrical tube, a bipartite metal enclosure, or other round or non-round-type metal housing. It is also common to seal opposite ends of the mat material against the internal surface of the metal housing.

One of the requirements of the design is to have the mat material compressed between the outer metallic housing and the monolith substrate. Normal specifications of the catalytic converter require that a minimum pressure exists between the mat material and the monolith substrate, which retain the monolith substrate in place in the outer tube. At the same time, the specifications set a peak pressure on the monolith substrate during manufacture. The purpose of having a peak pressure is that a large force on the monolith substrate tends to fracture the substrate along a transverse face thereof One of the difficulties in working with such substrates is that several different geometries exist, and different geometries have different fracture characteristics. Moreover, the monolith substrates have a tolerance in their diameter of +3 mm to -1 mm. Thus the deformation alone cannot be measured. Furthermore, it has not heretofore been possible to monitor the manufacturing process in light of such fracture characteristics to enable proper manufacturing of the catalytic converters with the proper load between the mat material and the monolith, without causing fracture of some of the monoliths.

U.S. Patent 5,273,724 discloses the manufacturing of a catalytic converter that includes a core retained within a casing formed from two shells. During the manufacture of the converter, the shells are pressed together while the core is retained therebetween, and then the shells are welded together. The reference teaches that a maximum pressure exerted by the press on the shells may be controlled by way of an electronic or pneumatic control valve which ensures the pressure asserted on the shells does not exceed a predetermined maximum pressure. The reference however, fails to teach determining of fracture characteristics of the core, prior to the compression of the outer tube, in order to ensure an efficient compression of a plurality of outer tubes during a continuous manufacturing process.

An international patent application published as WO 99/32215 discloses an additional method of manufacturing a catalytic converter. The catalytic converters disclosed in the reference include a monolith substrate and a mat compressed within the outer shell of a container. Rather, the invention disclosed in the reference relates to the resizing of the outer shell of the container, once the monolith substrate and mat material combination have been inserted therein. The resizing of the outer shell is based upon an equation depending upon the diameter of the substrate, the mat target thickness, and the wall thickness. Additionally, the outer shell of the container is then reduced to a predetermined diameter based upon the mathematics of the given equation. The reference does not teach, however, the measuring of the fracture characteristics of the core for each converter, and then determining the most efficient shrinkage curve based upon the characteristics measured.

EP 0 982 480 A2 discloses a catalytic converter which is constructed by measuring a substrate to be placed within an outer shell or can, wrapping the substrate in a selected mat and loading the package comprising the mat and the substrate into the can. The can is larger than it will be at completion of manufacture to render such loading easier. Subsequent to loading, the measurement of the substrate is used to direct the degree to which the can is reduced in outside dimension such that a selected annulus is created between the substrate and can, said annulus being occupied by said mat.

The object of the present invention then is to alleviate the shortcomings present in the market.

### SUMMARY OF THE INVENTION

The objects of the invention have been accomplished by providing a method of manufacturing a catalytic converter comprised of an outer tube, a monolith substrate and a mat material surrounding the monolith. The method comprising the steps of establishing the fracture characteristics of the monolith substrate for the combination of the monolith substrate and mat material, for various time-based radial compressions. A suitable compression sequence is then selected such that the monolith substrate will not fracture, and the mat material is placed around the monolith substrate. The combination of the mat material and monolith substrate is then inserted into the outer tube, and the combination of the outer tube, mat material and monolith substrate are compressed according to the compression sequence so that the monolith substrate is not fractured.

In the preferred embodiment of the invention, the outer tube is radially deformed inwardly to compress the combination of the outer tube, mat material and monolith substrate. One method of radially deforming the tube is by compression swaging of the tube. A second method of radially deforming the tube is by spinning the combination of the outer tube, mat material and monolith substrate, to reduce the diameter of the outer tube.

In either of these alternatives, the mat material and monolith substrate can be partially compressed prior to the deformation step, so as to pre-load the mat material. The mat material and monolith substrate can be compressed together, and then moved longitudinally into the outer tube. This can be accomplished by radial compression at a compression station. Alternatively, the mat material and monolith substrate can be radially compressed by rollers.

Also in the preferred embodiment of the invention, the process includes the further step of necking down the ends of the outer tube to a smaller profile. This can be accomplished by necking the ends down by spinning, such that the ends have diameters smaller than the profile of the remainder of the outer tube. Also preferably, and prior to the spinning step, funnel-shaped heat shields are inserted into opposite ends of the outer tube, and adjacent to the monolith substrate, and the outer tube is spun in order that the ends are spun down to substantially conform to the profile of the heat shield, and retain the heat shield in place.

In another aspect of the invention, a method of manufacturing a catalytic converter comprised of an outer tube, a monolith substrate and a mat material surrounding the monolith, is manufactured by a process where the mat material is first inserted around the monolith substrate. The mat material is then partially and radially compressed against the monolith substrate. The combination of the mat material and monolith substrate is next inserted into the outer tube. Finally, the combination of the outer tube, mat material and monolith substrate are compressed together.

In the preferred embodiment of the invention, the mat material and monolith substrate are together compressed, and then moved longitudinally into the outer tube. This can be accomplished in one of two ways. The mat material and monolith substrate can be radially compressed at a compression station, where substantially all of the mat material is simultaneously radially deformed. Alternatively, the mat material can be radially compressed by rollers, where the mat material and monolith substrate are moved longitudinally through a roller station, whereby the mat material is sequentially compressed as it moves through the rollers, and the combination of the mat material and monolith substrate are moved longitudinally into the outer tube.

The tube must also be compressed. The tube can be radially deformed by compression swaging. Alternatively, the tube may be radially deformed by spinning the combination of the outer tube, mat material and monolith substrate, to reduce the diameter of the outer tube.

The ends of the tube can also be necked down to a smaller profile, somewhat funnel-like. The ends of the tube may be necked down by spinning, such that the ends have diameters smaller than the profile of the remainder of the outer tube. Also in one embodiment, prior to the spinning step, funnel-shaped heat shields are inserted into opposite ends of the outer tube, and adjacent to the monolith substrate, and the outer tube is spun in order that the ends are spun down to substantially conform to the profile of the heat shield, and retain the heat shield in place.

In another version of the invention, a method of manufacturing a catalytic converter comprised of an outer tube, a monolith substrate and a mat material surrounding said monolith, said method comprises the steps of inserting the mat material around the monolith substrate; partially and radially compressing the mat material against the monolith substrate; measuring the force applied by the mat material, and determining the incremental deformation required to achieve a given force.

A novel gauge member according to the invention to determine the proper deformation required to achieve a predetermined force applied to a monolith material by the compression of a surrounding mat material, comprises means to surround said mat and monolith material and at least partially compress said mat and monolith material, means to measure the force or pressure exerted by the mat material compression, and means to measure the diameter of compression, or the deflection to which the mat material has been deflected.

An assembly machine for assembling mat material around a monolith material, and compression means for compressing an outer tube around said mat material, includes a gauge as mentioned above. Preferably, the assembly machine further comprises a control means to take said force or pressure data, and said diameter or deflection data and feed that information to said compression means.

### BRIEF DESCRIPTION OF THE DRAWINGS

The preferred embodiment of the invention will now be described with reference to the drawings where:

Figure 1 depicts one embodiment of a catalytic converter as manufactured by the present method;

Figure 2 shows a hypothetical force curve versus various times for compression of the mat material;

Figure 3 shows a first embodiment of a gauge apparatus for loading monolith substrate into the catalytic converter tubes;

Figure 4 is a second embodiment of gauge apparatus similar to that of Figure 3;

Figure 5 is an enlarged version of the gauge apparatus of Figure 3;

Figure 6 is an enlarged view of the gauge apparatus shown in Figure 4;

Figure 7 shows an apparatus for further reducing the diameter of the outer tube and the first process step thereof;

Figure 8 is similar to Figure 7 showing the follow-up dimensioned reduction step;

Figures 9 through 14 show an alternative embodiment sequence of method steps where a heat shield can also be placed in the catalytic converter and held in place at both ends by the method steps;

Figures 15 through 17 show another alternative version of assembling the catalytic converter.

Figures 18-22 show yet another alternative embodiment of apparatus for reducing the diameter of the outer tube, where the outer tube is comprised of shrinking dies;

Figure 23 is a chart showing the deformation for three different mat materials to achieve various levels of force;

Figure 24 shows the curve of the three mat materials of Figure 23;

Figure 25 shows the empirical data of the pressure versus time for a constant velocity shrinking;

Figure 26 shows the pressure on monolith with a variable velocity shrinkage; and

Figure 27 shows the shrinkage velocity versus time.

### DETAILED DESCRIPTION OF THE INVENTION

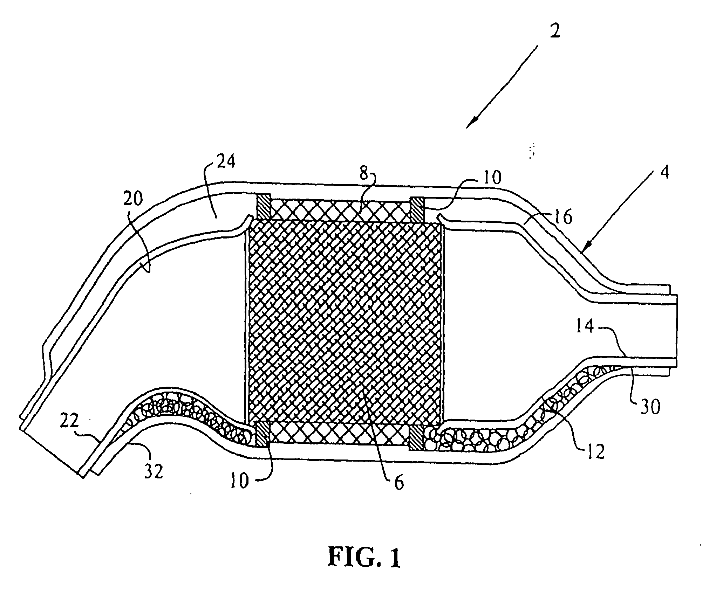

With reference first to Figure 1, an example of a catalytic converter manufactured according to the process of the present invention is shown generally at 2, and includes an outer tube member 4, a monolith substrate 6, a mat material 8 with end seal members 10. The catalytic converter 2 can also optionally include a first heat shield member 12 having a necked-down section 14, thereby forming an internal air gap at 16. The catalytic converter 2 can also include a second heat shield member 20 having a necked-down section 22 forming an air gap at 24. It should be appreciated to those skilled in the art that the mat material 8 can either be a stainless steel mesh-type material, or can alternatively be a nonflammable, fibrous-type material. In either case, the mat material 8 is compressible but, when compressed in the combination of the monolith 6, mat material 8, and outer tube 4, causes a force transfer from the mat material to the monolith substrate 6, and an equal reaction force against the inner wall of the outer tube 4.

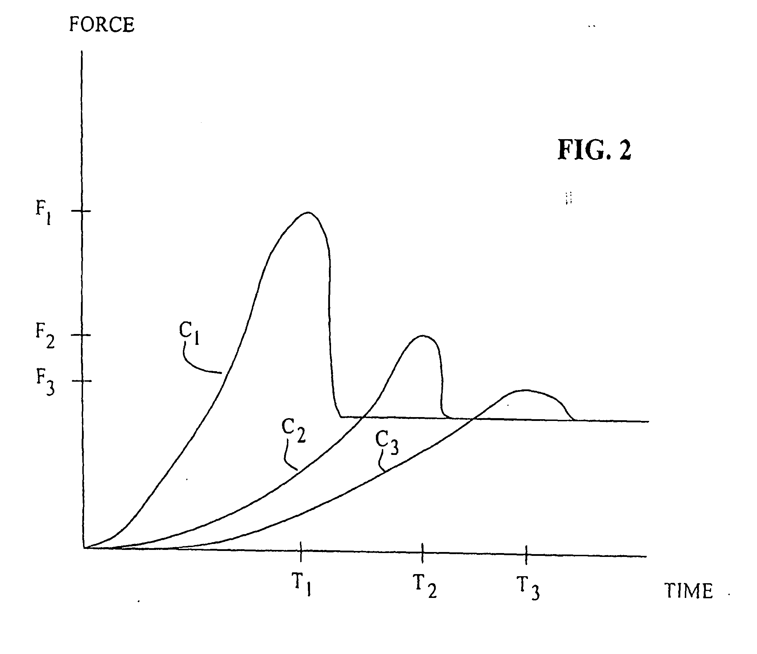

With reference now to Figure 2, a force-vs.-time curve is depicted where the Y axis represents force transmitted between the mat to the monolith, whereas the X axis shows various times, that is, the time for the compression of the mat material (assuming the same depth of compression). Thus, the first curve C₁ shows that, if the mat material is compressed quickly, that is, within T₁ seconds, the peak force is reached quickly, that is, to F₁, where F₁ may be greater than the force required to shear the monolith substrate, or may cause a pressure higher than that allowed by the manufacturer. However, if the mat material is compressed over a longer period of time and to the same deformation, but within a longer period of time, that is, to T₂ seconds, a lower peak force F₂ is reached. Finally, if the mat material is compressed to the same deformation over yet a longer period of time, that is, over T₃ seconds, a peak force of F₃ is reached. It should be appreciated that any number of times and deformations can be applied and accommodated, all dependent on the end result which is desired.

Thus, for every different monolith geometry, the peak force for fracturing of the monolith substrate may be measured such that the pressure against the monolith substrate in psi never exceeds a maximum threshold during manufacturing. For any given monolith substrate and manufacturing specifications, the cycle time can be minimized to the most efficient process. Also, according to the process described, the force and/or pressure can be measured, and the process is repeatable.

For example, a common or typical manufacturing specification for a catalytic converter would require that a minimum pressure of 30 psi exist between the mat material and the monolith substrate after the completion of the manufacturing process, yet that during the manufacturing process, the peak pressure between the mat material and the monolith substrate never exceeds 100 psi. Thus, for this given manufacturing specification, and by knowing the fracture pressure according to the testing discussed in relation to Figure 2, the manufacturing process can be formulated such that the manufacturing time for compressing the mat material is held to a minimum, thereby reducing cycle time, yet ensuring that during the manufacturing process, the monolith never fractures or is subjected to a pressure higher than the set engineering specifications. It should also be understood that for any of the force curves C₁-C₃, a multiple-step process is possible. In other words, the compression which takes place between the mat material and the monolith substrate can either be a one-step process or can be various steps, where the combination of the subcomponents are moved from station to station.

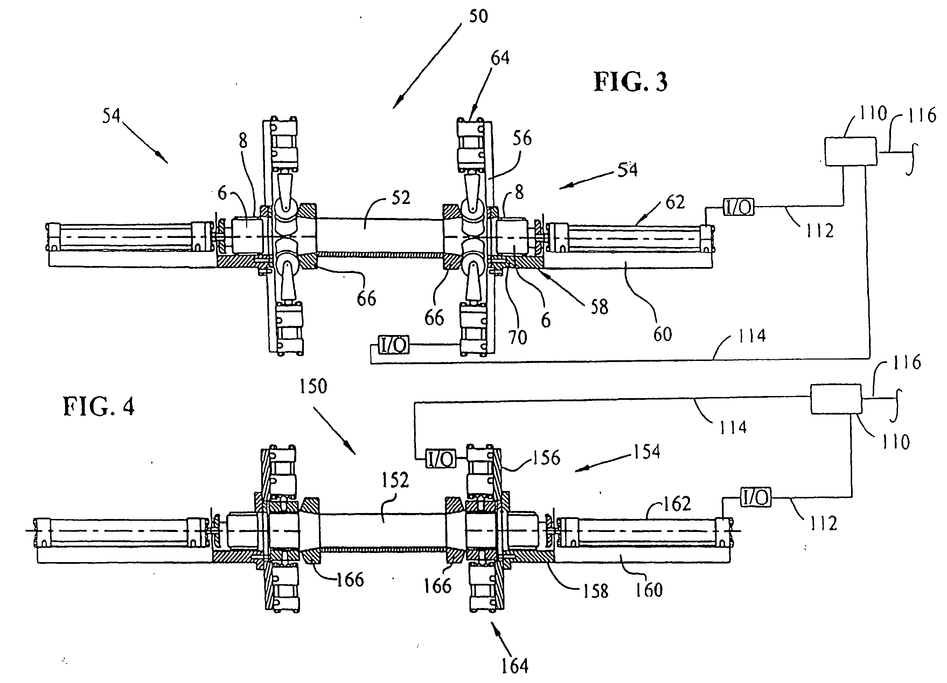

With reference first to Figures 3, 6, 7, and 8, a process according to one version of the invention will be described. With reference first to Figure 3, a loading device 50 for loading the monolith substrate 6 wrapped with the mat material will be described. The device 50 comprises a central U-shaped loading section 52 for positioning of the outer tube, and includes gauge devices 54 mounted at opposite ends of the U-shaped loading section. The gauge devices shown generally at 54 will now be described, and it should be understood that the devices 54 are identical but mirror images of each other, so that only one such device will be described. It should be understood that the gauge members will both assist in the invention of the mat material and monolith in the outer tubes, but will also measure the force and/or pressure which the mat material is exerting on the monolith substrate 6.

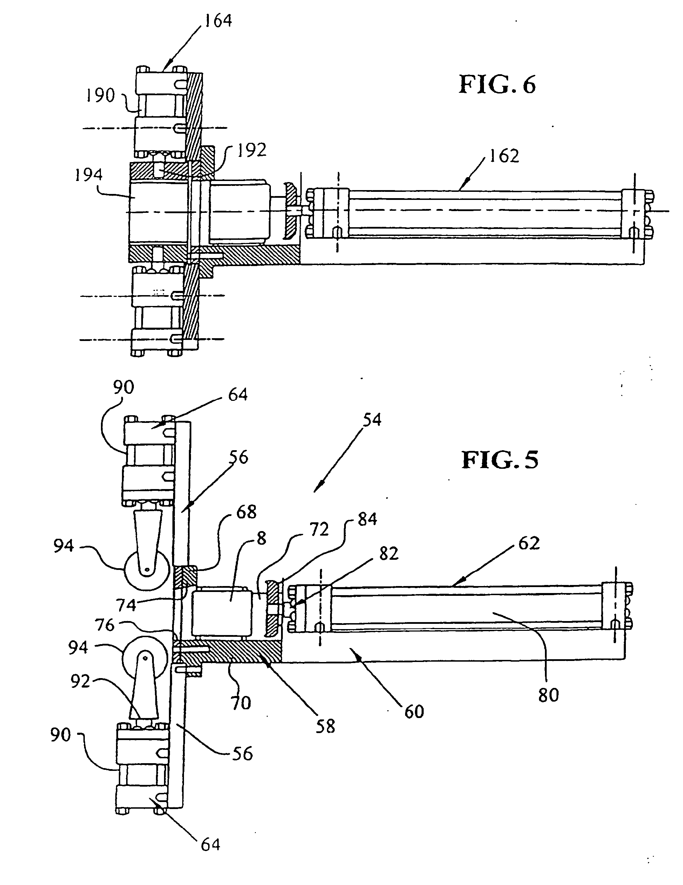

As shown in Figure 3, the gauge device 54 generally includes a vertical platen portion 56, a bracket portion 58, which is attached to the platen 56, and includes as a further extension thereof, the cylinder stand 60. A cylinder mechanism 62 is positioned on the cylinder stand 60 as will be described further herein. The device 54 further includes a plurality of pressure roller assemblies 64, which, in the preferred embodiment, are disposed in a radial array around a tapered lead-in member 66. With respect now to Figure 5, the insertion device 54 will be described in greater detail. The bracket member 58 includes a vertical wall portion 68 and a U-shaped wall portion 70 having side wall portions at 72. The vertical wall portion 68 includes an opening at 74, which feeds into a tapered opening at 76 and thereafter towards the pressure roller assemblies 64 as will be described herein.

With reference still to Figure 5, the cylinder mechanism 62 could either be a pneumatic or hydraulic cylinder, and includes a cylinder portion 80 having a rod portion 82 and a pusher section at 84. As shown, the pusher section 84 is positioned within the U-shaped wall 70 and substantially axially aligned with the tapered opening 76. Finally, the pressure roller assemblies 64 also include cylinder portions 90 having a rod portion 92 operatively connected to rollers 94. It should be appreciated that the rollers 94 are contoured with an arcuate shape (as best viewed in Figure 3) such that with their radial alignment and the conformance of the arcuate shapes of the rollers 94, are substantially profiled in a circular manner.

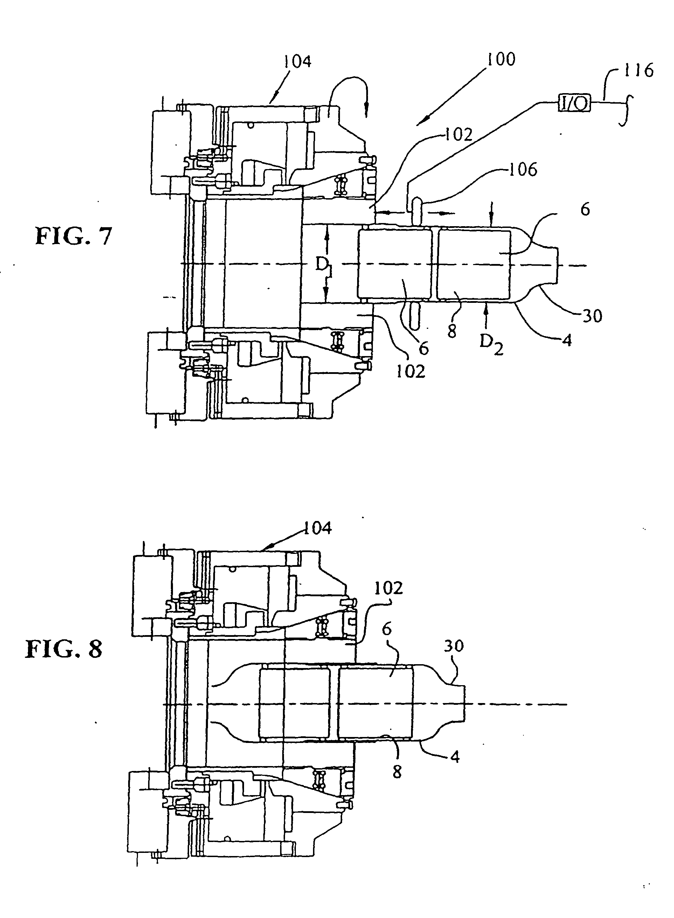

With reference now to Figure 7, a spinning apparatus is generally shown at 100 including chuck jaws 102 which are common in the art of spinning. These chuck jaws move on a radial line so as to retain a circular member for spinning. The chuck head 104 generally rotates in a clockwise position as viewed at the front of the head and as depicted by the rotational arrow in Figure 7. Meanwhile a pressure roller 106 (held by a pressure arm, not shown) can be pressed against the outside of the contour of the tube 4 for spinning purposes, and itself is held on a rotational axis and is a driven roller, not a drive roller. Pressure roller 106 is movable along the longitudinal axis bi-directionally as depicted by the arrows in Figure 7, and is movable inward radially, thereby changing the diameter of the item being spun.

With reference now to Figures 3, 5, 7, and 8, a first method of producing a catalytic converter according to the present invention will be described. With reference first to Figure 3, an outer tube, such as item 4 which in this stage is simply a straight cylindrical tube, can be placed within the U-shaped portion 52, such that the ends of the tube are aligned with lead-in members 66. Monolith members 6 with wrapped mat material 8 are then placed within U-shaped wall members 70 aligning them with the cylinders 62. At this point, reference is again made to Figure 2 to recall that the speed of the deformation of the mat material will determine the force and pressure characteristics being placed on the monolith substrate.

Thus, as should be appreciated, a control mechanism 110 will be included to control the speed of both the cylinder 62 and pressure roller assemblies 64, and to record the force/pressure on the monolith. The pressure roller assemblies 64 are activated to cause inward radial movement of the various rollers 94. Input data, for example through cable 112, will be used to control the radial movement, and thus the compression. At the same time, output data will be gathered in the way of force data to ensure that the peak pressure is not exceeded, and to know the force which has been exerted. This output data is fed forward to the control mechanism, and then to the spinning apparatus to ensure that the entire process is within spec. Input/output data will be used to both control and measure the cylinder 62 and the resultant speed of the cylinder rod 82 and pusher member 84. Thus the speed of the pusher member 84 will determine how quickly the mat material 8 is compressed vis-à-vis the tapered opening 76 and plurality of rollers 94. Further compression exists at the tapered members 66 and during entry of the mat material into the outer tube member 4. Input/output data, for example through cable 114, both captures and controls the pressure exerted by rollers 94. However, all of the compression and force characteristics of the monolith substrate can be predetermined such that the only variable to the process for control is the speed of the cylinder rod 82, such that identical results are continuously reproduced in a manufacturing setting with commercially acceptable cycle times. This data is also fed forward to the control mechanism and thereafter on to the spinning apparatus.

As can be viewed in Figure 3, two monolith substrates are simultaneously inserted from opposite ends of the outer tube 4 tube to position two monoliths adjacent to each other. However, it should be understood that the number of monolith members is immaterial to the invention, such that a plurality of monolith members could be inserted or a single elongate monolith substrate could be installed.

It should be appreciated at this point in the process cycle that the two monolith members are pre-installed and pre-stressed within the outer tube 4 and can be removed from the U-shaped member 52 and moved to the spinning apparatus depicted in Figures 7 and 8. It should also be appreciated that, given the pre-stress between the mat material and the monolith substrate within the outer wall 4, the mat material does not have the adequate pressure on the monolith and therefore the force of the mat material and the resultant pressure is only partially up the force curves C₁, C₂ or C₃. At the same time, while the complete force/pressure is not yet exerted, the input/output data from both the cylinder 62 and pressure roller assemblies 64 has been fed forward to the control mechanism through respective cables 112, 114, and hence will control the remainder of the spinning process in accordance with the selected curve of Figure 2.

With reference now to Figure 7, the combination of the outer tube 4, the monolith substrate 6, and the mat material 8 is inserted into the spinning apparatus 100 and captivated within the jaws 102. According to the spinning process, then, the spinning head 104 begins to spin to its full speed, whereby the pressure roller 106 begins to exert pressure on the outer tube 4 at the front end of the tube, that is, the tube end extending out of the head 104. As shown in Figure 7, the spinning process can reduce the diameter of the outer tube from the diameter D₁, that is, its original diameter to diameter D₂, as well as provide the constricted end 30. This entire process, both the radial depth as well as the axial speed, is accomplished according to the input data, fed forward from the control mechanism through cable 116.

It should be appreciated that in the process step of Figure 7, that due to the fact that the outer tube 4 is chucked up within the spinning head 104, the entire length of the outer tube cannot be spun in this step. Rather, after the tube is spun to approximately the configuration shown in Figure 7, the spinning head 104 is stopped, the partially spun outer tube is removed from the head and flipped around to insert the completed portion of the outer tube into the head, whereby the remainder of the outer tube is spun to the same dimension as that previously spun. It should also be appreciated that the spinning process, that is, taking the diameter from diameter D₁ to diameter D₂ also compresses the mat material between the outer tube and the monolith substrate. It should also be appreciated that the time of compression, that is, in accordance with the Figure 2 force vs. time of curve, is calibrated as it relates to the axial speed of the roller 106 as it relates to the spinning process. Said differently, the faster the axial speed of the movement of the roller 106 in the spinning process will determine whether the force characteristics of the mat material on the monolith substrate follows curves C₁, C₂ or C₃.

With reference now to Figures 4 and 6, an alternate method of manufacturing the catalytic converter will be described. As shown in Figure 4, the insertion mechanism 150 generally includes U-shaped tube holder 152 and an insertion mechanism 154 mounted to opposite ends of the U-shaped holder 152. The U-shaped holder generally includes a vertical platen 156, a bracket member 158, a cylinder stand 160, and a hydraulic cylinder 162. The vertical platen 156 holds compression members 164. With reference now to Figure 5, the member 164 includes a pneumatic cylinder 190 having rods 192 attached to semi-cylindrical pressure jaws 194. These pressure jaws are aligned with tapered lead-in members 166 and with U-shaped tube holder 152.

The mechanism 150 of the Figure 4 embodiment is also usable with the identical spinning mechanism 100 shown in Figures 7 and 8 according to the following processing. An outer tube 4 is first placed in the U-shaped holder 152, and the cylinders 162 first move the monolith substrates and mat material into their respective compression jaws 194. When the monolith substrates are laterally aligned within the compression jaws 194, the cylinder 190 is activated which causes a compression of the mat material surrounding the monolith substrate. Once again this compression and the time thereof is made in accordance with the selected compression sequence, that is, according to one of the illustrative curves C₁ C₂ or C₃. When the mat material is compressed to its proper position, the cylinders 162 are again activated moving the monolith substrate through the tapered members 166 and into the outer tube. At this point, the loaded outer tube 4 and monolith members are moved to the spinning device of Figures 7 and 8 and processed in the same manner as mentioned above. It should be appreciated that input/output data is again used in the manner as previously described with respect to the prior method.

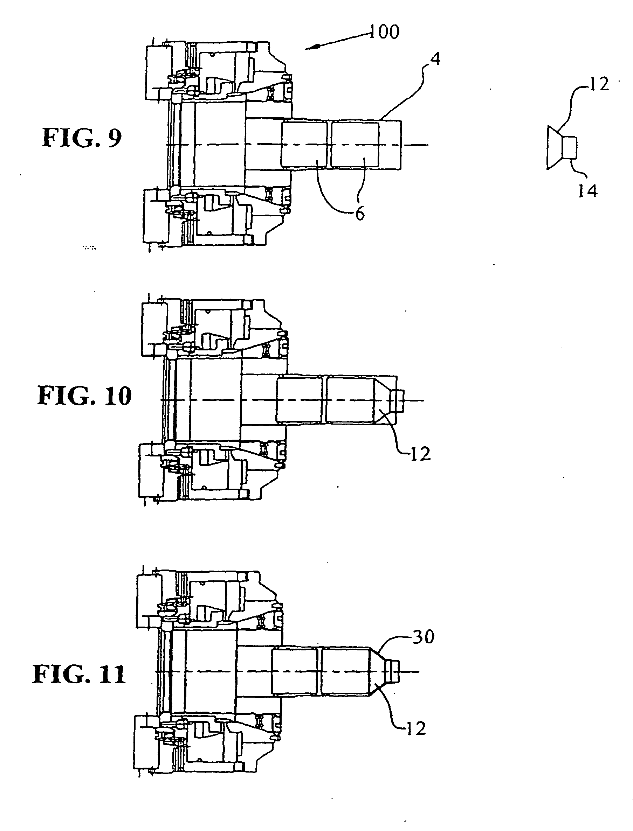

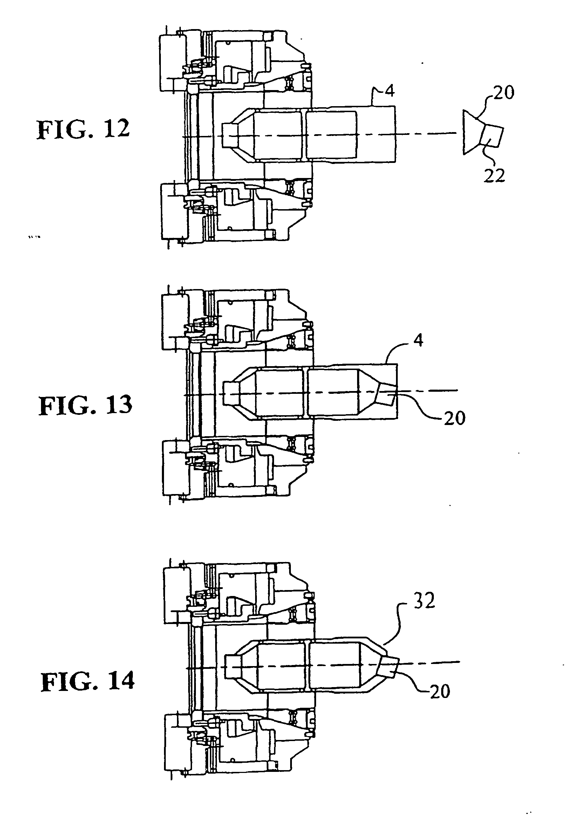

With reference now to Figures 9 through 14, an alternate embodiment of the spinning process will be described, where internal heat shields such as items 12 and 20 are desired internal to the outer tube. As first shown in Figure 9, the heat shield 14 can be inserted into the open end of the outer tube 4 adjacent to a first monolith member to a position shown in Figure 10. As shown in Figure 11, the spinning process can begin and spin the extended part of the outer tube such that a tapered portion 30 is tapered to a substantial profile to that of the heat shield 12 to conform thereto. As in previous spinning steps, the partially completed spun outer tube is turned 180° to the position shown in Figure 12 to receive the other heat shield member 20 and is inserted into the outer tube 4 to the position shown in Figure 13. The spinning process continues to spin both the outer diameter of the outer tube as well as to spin tapered section 32, which lies adjacent to the heat shield 20.

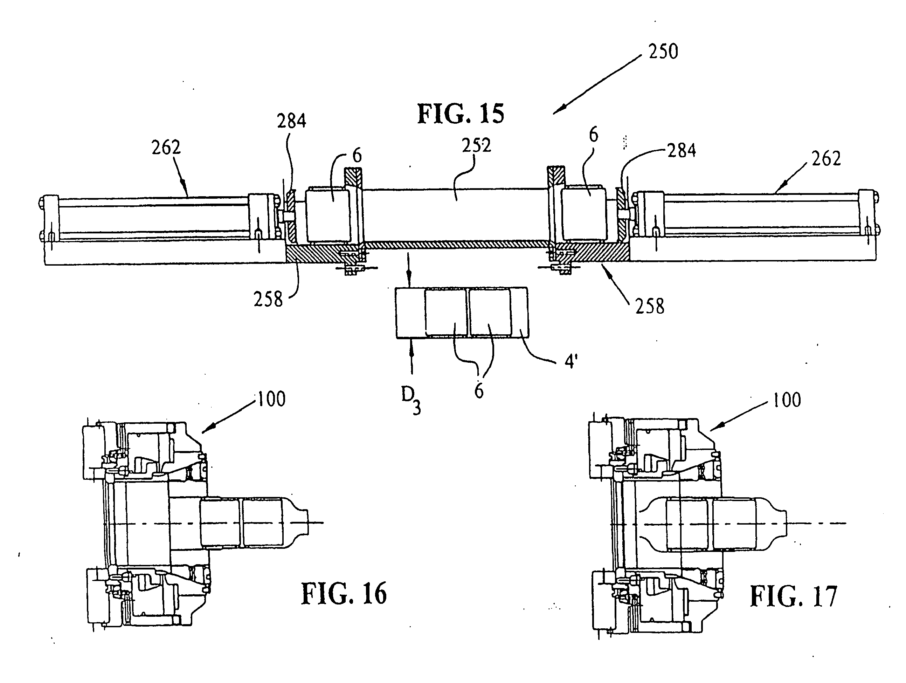

With respect now to Figures 15 through 17, another possible method according to the invention is disclosed including a loading apparatus 250 including cylinder assemblies 262 arranged at opposite ends of bracket members 258, however, where no precompression by way of compression rollers or compression jaws takes place. Rather, the monolith members 6 are moved into the intermediate portion of outer tube member 4', where the diameter D₃ of outer tube 4' is slightly larger than D₁. The pre-assembly of outer tube 4' together with the monolith members 6 may now be moved to the spinning apparatus 100 as shown in Figures 16 and 17 and spun according to one of the force compression sequences disclosed in Figure 2. It should be appreciated that, due to the fact that very little pre-stress is applied between the mat material and the monolith, all of the compression force, that is, the entire curve of force curves C₁, C₂ or C₃, will be applied by the spinning process of Figures 16 and 17.

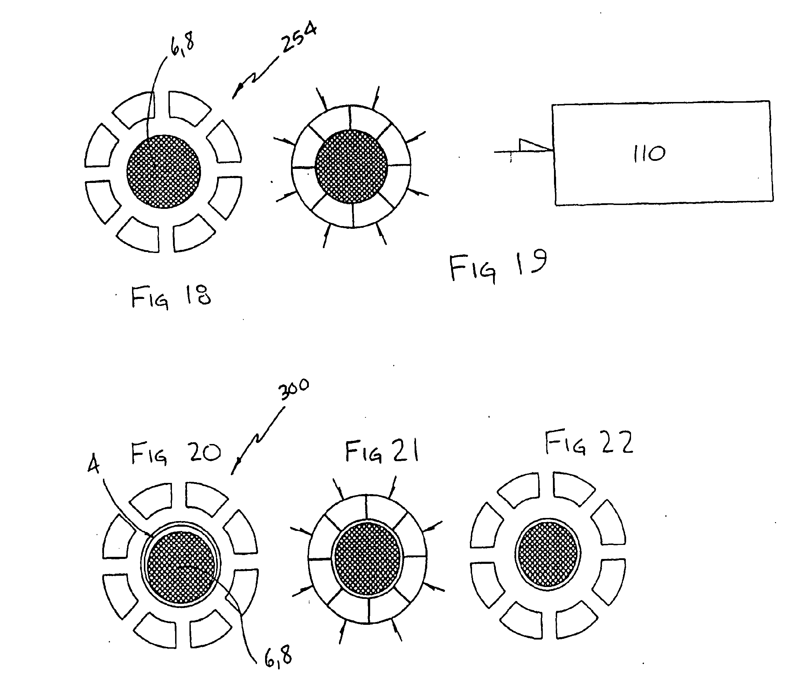

While the method is shown only with respect to round or cylindrical tubes, non-round tubes are also possible. In this case, the insertion apparatus would include a modified compression jaw similar to that shown with respect to Figures 4 and 5, with compression jaws sized to conform to the non-round items. A further compression of the entire outer tube would also be used, where the incremental compression completes the mat compression cycle. This device is more particularly referred to in Figures 18-22.

With respect first to Figure 18, a shrinking member 254 is shown diagrammatically which receives a combination of the mat material and monolith 6, 8 and as shown in Figure 19 compresses the combination of the mat and monolith to a certain compression. This information, that is, the force exerted from the monolith back to the shrinking dies as well as the diameter to which the combination of the mat material and monolith is compressed is fed to the control mechanism 110. This information is fed forward to shrinking dies 300, whereby the combination of the mat material and monolith 6, 8 can be placed within an outer tube 4 and positioned within the shrinking dies 300. Given the information fed forward from the gauge 254, that is, the pressure exerted on the gauge (which will coincide with the force exerted on the monolith material) together with a diameter to which the mat material has been compressed, and together with the specific force characteristic of the specific mat material used, the shrinking die 300 can determine exactly to what further compression the combination of the outer tube 4 needs to be compressed.

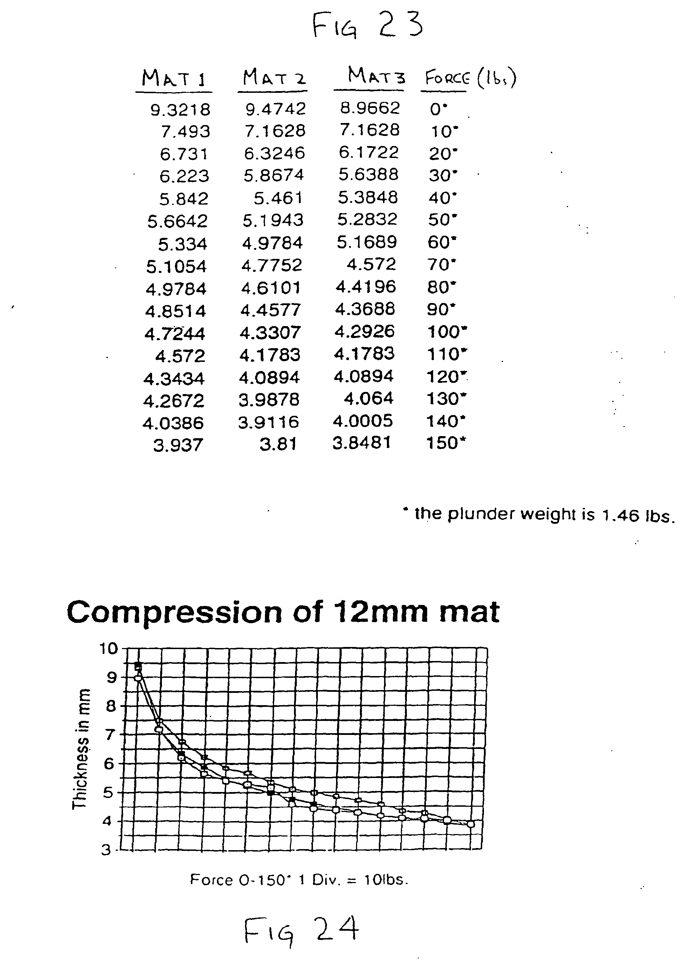

For example, as shown in Figure 23, three different mat materials were tested to determine to which dimension they need to be compressed in order to achieve a given force. Figure 24 shows the dimensions to which the 12 mm mat material was compressed to achieve various forces.

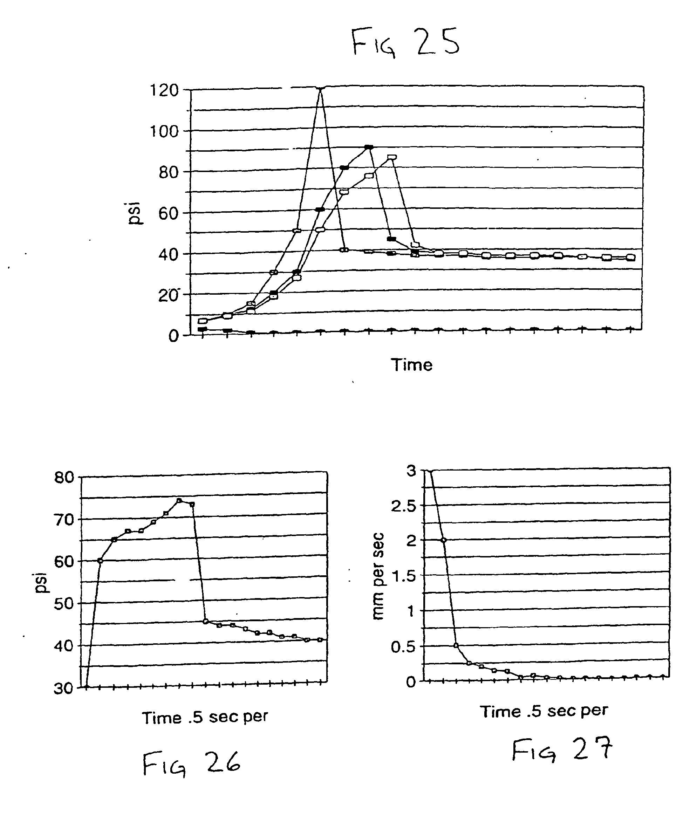

Figures 25-27 also show estimated data for a particular mat material, where Figure 25 shows the pressure versus time on the mat material given a constant velocity of deformation. However, if the acceleration of the deformation or, for example, shrinking according to Figures 20-22, then as shown in Figure 26, the peak pressure can be eliminated by decelerating the shrinking dies so as to totally eliminate the spike in a pressure curve of Figure 25. This deceleration is shown more particularly in Figure 27.

Thus, for any of the embodiments of the gauge members described above, 54, 154, or 254, the advantage is that the gauge station can measure the contraction or deformation to which the mat material is drawn, together with the force which is applied back to the gauge. As mentioned above, this force will be the same which is being exerted on the monolith itself Thus, it is anticipated that the control mechanism 110 will have pre-loaded data for each mat material to be used, thus by gathering the data as mentioned above, and by comparison to the force curve, in order to achieve a certain force on the monolith, the added change in deformation will be known. As also mentioned above, the monolith substrates have a tolerance of +3 mm to -1 mm. It should be readily apparent why it is not acceptable to compress or deform the mat material and the monolith to a given diameter, as the variance of 4 mm in the diameter (that is, the tolerance range between the diameters of monolith substrates) being +3 mm to -1 mm) would lead to a drastic result in the force applied to the mat material and monolith substrate.

## Claims

1. A method of manufacturing a catalytic converter (2) comprised of an outer tube (4), a monolith substrate (6) and a mat material (8) surrounding said monolith substrate, said method comprising the steps of:
wrapping said mat material (8) around said substrate (6);
compressing said mat material (8) to apply a force to the substrate (6), to a compressed dimension having a compression less than that required to fracture said substrate (6);
measuring the compressed dimension of said mat material (8) and substrate (6);
inserting said mat material (8) and substrate (6) into said outer tube (4); and
compressing said outer tube (4)against said mat material (8) in order to reduce said mat material (8) to said compressed dimension.

2. The method of manufacturing a catalytic converter as set forth in claim 1, wherein the compression step is accomplished in a gauging station (54, 154, 254), and the compressed dimension information is fed forward to a compression station (100, 300).

3. The method of manufacturing a catalytic converter as set forth in claim 1 or 2, wherein the gauging station (54) is comprised of a plurality of rollers (94).

4. The method of manufacturing a catalytic converter as set forth in claim 1 or 2, wherein the gauging station (154) is comprised of semi-cylindrical pressure jaws (194).

5. The method of manufacturing a catalytic converter as set forth in claim 1 or 2, wherein the gauging station (254) is comprised of a plurality of gauging dies.

6. The method of manufacturing a catalytic converter as set forth in any of claims 1-5, wherein said compressed dimension is a diameter of said mat material as compressed.

7. The method of manufacturing a catalytic converter as set forth in any of claims 1-6, wherein said compression step is accomplished by a spinning roller (100).

8. The method of manufacturing a catalytic converter as set forth in any of claims 1-6, wherein said compression step is accomplished by a plurality of shrinking dies (300).

9. The method of manufacturing a catalytic converter as set forth in any of claim 1-8, wherein said compressed dimension is fed forward from said gauging station (54, 154, 254) to said compression station (100, 300) by a control means (110).

10. The method of manufacturing a catalytic converter as set forth in any of claims 1-9, wherein said compression means (100, 300) compresses said outer tube (4) at a speed pre-selected to correspond to a desired compression sequence.

11. The method of manufacturing a catalytic converter as set forth in any of claims 1-10, further comprising the step of necking down the ends (30, 32) of the outer tube (4) after compressing said outer tube (4).

12. A gauge assembly (54, 154, 254) to determine the proper deformation required to achieve a predetermined force applied to a monolith substrate (6) by the compression of a surrounding mat material (8), **characterized by** means (64, 164) to surround said mat material (8) and monolith substrate (6) and at least partially compress said mat (8) and monolith material (6), means (110,112, 114) to measure the force or pressure exerted by the mat material compression, and means (116) to measure the diameter of compression, or the deflection to which the mat material has been deflected.

13. An assembly machine including a gauge as claimed in claim 12, for assembling said mat material around said monolith material, the assembly machine further comprising compression means (100, 300) for compressing an outer tube (4) around said mat material (8), and control means (110, 112) to measure said force or pressure data, and said diameter or deflection data and feed that information to said compression means (100, 300).

14. The assembly as set forth in either of claims 12 or 13, wherein the gauging station surrounding means is comprised of a plurality of rollers (94).

15. The assembly as set forth in either of claims 12 or 13, wherein the gauging station surrounding means is comprised of semi-cylindrical pressure jaws (194).

16. The assembly as set forth in either of claims 12 or 13, wherein the gauging station surrounding means is comprised of a plurality of gauging dies (254).

17. The assembly as set forth in any of claims 12-16, wherein said compression means is a spinning roller (100).

18. The assembly as set forth in any of claims 12-16, wherein said compression means is a plurality of shrinking dies (300).

19. The assembly as set forth in any of claims 12-18, wherein said compression means (100, 300) compresses said outer tube at a speed pre-selected to correspond to a desired compression sequence.

20. The assembly as set forth in any of claims 12-19, wherein said compression means (100, 300) necks down the ends of the outer tube after compressing said outer tube.

## Patentansprüche

1. Verfahren für das Herstellen eines katalytischen Wandlers (2), der ein Außenrohr (4), ein Monolithsubstrat (6) und ein das Monolithsubstrat umgebendes Mattenmaterial (8) aufweist, wobei das Verfahren folgende Schritte aufweist:
Wickeln des Mattenmaterials (8) um das Substrat (6);
Komprimieren des Mattenmaterials (8), um eine Kraft auf das Substrat (6) aufzubringen, auf eine komprimierte Größe mit einer Kompression, die geringer ist als die für das Brechen des Substrats (6) erforderliche;
Messen der komprimierten Größe des Mattenmaterials (8) und Substrats (6);
Einführen des Mattenmaterials (8) und des Substrats (6) in das Außenrohr (4); und
Komprimieren des Außenrohrs (4) gegen das Mattenmaterial (8), um das Mattenmaterial (8) auf die komprimierte Größe zu reduzieren.

2. Verfahren für das Herstellen eines katalytischen Wandlers nach Anspruch 1, wobei der Kompressionsschritt in einer Messstation (54, 154, 254) ausgeführt wird und die Information der komprimierten Größe weiter an eine Kompressionsstation (100, 300) gespeist wird.

3. Verfahren für das Herstellen eines katalytischen Wandlers nach Anspruch 1 oder 2, wobei die Messstation (54) eine Mehrzahl von Rollen (94) aufweist.

4. Verfahren für das Herstellen eines katalytischen Wandlers nach Anspruch 1 oder 2, wobei die Messstation (154) halbzylinderförmige Druckbacken (194) aufweist.

5. Verfahren für das Herstellen eines katalytischen Wandlers nach Anspruch 1 oder 2, wobei die Messstation (254) eine Mehrzahl von Messpressformen aufweist.

6. Verfahren für das Herstellen eines katalytischen Wandlers nach einem der Ansprüche 1 bis 5, wobei die komprimierte Größe ein Durchmesser des Mattenmaterials im komprimierten Zustand ist.

7. Verfahren für das Herstellen eines katalytischen Wandlers nach einem der Ansprüche 1 bis 6, wobei der Kompressionsschritt von einer Drückrolle (100) ausgeführt wird.

8. Verfahren für das Herstellen eines katalytischen Wandlers nach einem der Ansprüche 1 bis 6, wobei der Kompressionsschritt von einer Mehrzahl von Schrumpfpressformen (300) ausgeführt wird.

9. Verfahren für das Herstellen eines katalytischen Wandlers nach einem der Ansprüche 1 bis 8, wobei die komprimierte Größe durch eine Steuereinrichtung (110) von der Messstation (54, 154, 254) weiter zu der Kompressionsstation (100, 300) gespeist wird.

10. Verfahren für das Herstellen eines katalytischen Wandlers nach einem der Ansprüche 1 bis 9, wobei die Kompressionseinrichtung (100, 300) das Außenrohr (4) mit einer Geschwindigkeit komprimiert, die so vorausgewählt ist, dass sie einer erwünschten Kompressionsfolge entspricht.

11. Verfahren für das Herstellen eines katalytischen Wandlers nach einem der Ansprüche 1 bis 10, ferner aufweisend den Schritt des Einhalsens der Enden (30, 32) des Außenrohrs (4) nach dem Komprimieren des Außenrohrs (4).

12. Eine Messanordnung (54, 154, 254) zum Bestimmen der geeigneten Deformation, die für das Erreichen einer vorherbestimmten Kraft erforderlich ist, die durch die Kompression eines umgebenden Mattenmaterials (8) auf ein Monolithsubstrat (6) aufgebracht wird, **gekennzeichnet durch** eine Einrichtung (64, 164) zum Umgeben des Mattenmaterials (8) und des Monolithsubstrats (6) und zum mindestens teilweisen Komprimieren der Matte (8) und des Monolithmaterials (6), eine Einrichtung (110, 112, 114) zum Messen der Kraft oder des Drucks, die bzw. der **durch** die Mattenmaterialkompression ausgeübt wird, und eine Einrichtung (116) zum Messen des Durchmessers der Kompression oder der Verformung, bis zu der das Mattenmaterial verformt wurde.

13. Montagevorrichtung, aufweisend eine Messvorrichtung nach Anspruch 12 zum Montieren des Mattenmaterials um das Monolithmaterial, wobei die Montagevorrichtung ferner eine Kompressionseinrichtung (100, 300) zum Komprimieren eines Außenrohrs (4) um das Mattenmaterial (8) und eine Steuereinrichtung (110, 112) zum Messen der Kraft- oder Druckdaten und der Durchmesser- oder Verformungsdaten und zum Einspeisen dieser Information in die Kompressionseinrichtung (100, 300) aufweist.

14. Anordnung nach einem der Ansprüche 12 oder 13, wobei die Messstationsumgebungseinrichtung eine Mehrzahl von Rollen (94) aufweist.

15. Anordnung nach einem der Ansprüche 12 oder 13, wobei die Messstationsumgebungseinrichtung halbzylinderförmige Druckbacken (194) aufweist.

16. Anordnung nach einem der Ansprüche 12 oder 13, wobei die Messstationsumgebungseinrichtung eine Mehrzahl von Messpressformen (254) aufweist.

17. Anordnung nach einem der Ansprüche 12 bis 16, wobei die Kompressionseinrichtung eine Drückrolle (100) ist.

18. Anordnung nach einem der Ansprüche 12 bis 16, wobei die Kompressionseinrichtung eine Mehrzahl von Schrumpfpressformen (300) ist.

19. Anordnung nach einem der Ansprüche 12 bis 18, wobei die Kompressionseinrichtung (100, 300) das Außenrohr mit einer Geschwindigkeit komprimiert, die so vorausgewählt ist, dass sie einer erwünschten Kompressionsfolge entspricht.

20. Anordnung nach einem der Ansprüche 12 bis 19, wobei die Kompressionseinrichtung (100, 300) die Enden des Außenrohrs nach dem Komprimieren des Außenrohrs einhalst.

## Revendications

1. Procédé de fabrication d'un convertisseur catalytique (2) comprenant un tube externe (4), un substrat monolithique (6) et un matériau de mat (8) entourant ledit substrat monolithique, ledit procédé comprenant les étapes consistant à :
envelopper ledit matériau de mat (8) autour dudit substrat (6) ;
comprimer ledit matériau de mat (8) afin d'appliquer une force au substrat (6), jusqu'à obtenir une dimension comprimée ayant une compression inférieure à celle nécessaire pour fracturer ledit substrat (6);
mesurer les dimensions comprimées dudit matériau de mat (8) et dudit substrat (6) ;
insérer ledit matériau de mat (8) et le substrat (6) dans ledit tube externe (4) ; et
comprimer ledit tube externe (4) contre ledit matériau de mat (8) afin de réduire ledit matériau mat (8) jusqu'à obtenir la dimension comprimée.

2. Procédé de fabrication d'un convertisseur catalytique selon la revendication 1, dans lequel l'étape de compression est accomplie dans une station de jaugeage (54, 154, 254), et les informations de la dimension comprimée sont transmises à une station de compression (100, 300).

3. Procédé de fabrication d'un convertisseur catalytique selon la revendication 1 ou 2, dans lequel la station de jaugeage (54) comprend une pluralité de rouleaux (94).

4. Procédé de fabrication d'un convertisseur catalytique selon la revendication 1 ou 2, dans lequel la station de jaugeage (154) comprend des mâchoires de pression hémicylindriques (194).

5. Procédé de fabrication d'un convertisseur catalytique selon la revendication 1 ou 2, dans lequel la station de jaugeage (254) comprend une pluralité de matrices de jaugeage.

6. Procédé de fabrication d'un convertisseur catalytique selon l'une quelconque des revendications 1 à 5, dans lequel ladite dimension comprimée est un diamètre dudit matériau de mat une fois comprimé.

7. Procédé de fabrication d'un convertisseur catalytique selon l'une quelconque des revendications 1 à 6, dans lequel ladite étape de compression est accomplie au moyen d'un rouleau tournant (100).

8. Procédé de fabrication d'un convertisseur catalytique selon l'une quelconque des revendications 1 à 6, dans lequel ladite étape de compression est accomplie au moyen d'une pluralité de matrices de rétrécissement (300).

9. Procédé de fabrication d'un convertisseur catalytique selon l'une quelconque des revendications 1 à 8, dans lequel ladite dimension comprimée est transférée à partir de ladite station de jaugeage (54, 154, 254) vers ladite station de compression (100, 300) à l'aide d'un moyen de commande (110).

10. Procédé de fabrication d'un convertisseur catalytique selon l'une quelconque des revendications 1 à 9, dans lequel ledit moyen de compression (100, 300) comprime ledit tube externe (4) à une vitesse présélectionnée afin de correspondre à une séquence de compression souhaitée.

11. Procédé de fabrication d'un convertisseur catalytique selon l'une quelconque des revendications 1 à 10, comprenant en outre l'étape consistant à réduire le diamètre des extrémités (30, 32) du tube externe (4) après la compression dudit tube externe (4).

12. Assemblage de jauges (54, 154, 254) destiné à déterminer la déformation appropriée nécessaire afin d'atteindre une force prédéterminée appliquée à un substrat monolithique (6) en comprimant un matériau de mat entourant celui-ci (8), **caractérisé par** un moyen (64, 164) destiné à entourer ledit matériau de mat (8) et le substrat monolithique (6) et comprimer au moins partiellement ledit matériau de mat (8) et ledit matériau monolithique (6), un moyen (110, 112, 114) destiné à mesurer la force ou pression exercée par la compression du matériau de mat et du moyen (116) destiné à mesurer le diamètre de compression, ou la déviation par laquelle le matériau de mat a été dévié.

13. Machine d'assemblage comprenant une jauge selon la revendication 12, destinée a assembler ledit matériau de mat autour dudit matériau monolithique, la machine d'assemblage comprenant en outre un moyen de compression (100, 300) destiné à comprimer un tube externe (4) autour dudit matériau de mat (8), et un moyen de commande (110, 112) destiné à mesurer lesdites données de force ou de pression, et lesdites données de diamètre ou de déviation et délivrer ces informations audits moyens de compression (100, 300).

14. Assemblage selon la revendication 12 ou la revendication 13, dans lequel le moyen entourant la station de jaugeage comprend une pluralité de rouleaux (94).

15. Assemblage selon la revendication 12 ou la revendication 13, dans lequel le moyen entourant la station de jaugeage comprend des mâchoires de pression semicylindriques (194).

16. Assemblage selon la revendication 12 ou la revendication 13, dans lequel le moyen entourant la station de jaugeage comprend une pluralité de matrices de jaugeage (254).

17. Assemblage selon l'une quelconque des revendications 12 à 16, dans lequel ledit moyen de compression est un rouleau tournant (100).

18. Assemblage selon l'une quelconque des revendications 12 à 16, dans lequel ledit moyen de compression est une pluralité de matrices de rétrécissement (300).

19. Assemblage selon l'une quelconque des revendications 12 à 18, dans lequel lesdits moyens de compression (100, 300) compriment ledit tube externe à une vitesse présélectionnée afin de correspondre à une séquence de compression souhaitée.

20. Assemblage selon l'une quelconque des revendications 12 à 19, dans lequel ledit moyen de compression (100, 300) réduit le diamètre des extrémités du tube externe après compression dudit tube externe.
